# DEMANDE DE BREVET EUROPEEN

(11) **EP 1 321 236 A1**
(43) Date de publication de la demande: **25.06.2003**
(21) Numéro de dépôt: 01870263.9
(22) Date de dépôt: 27.11.2001
(51) Int. Cl.: B25B 5/14, B23Q 3/18

(54) **Procédé de mise en pince d'une piece en position statique par référentiel six points**

(71) Demandeur: Techspace Aero S.A., 4041 Herstal (BE)
(72) Inventeur: Balleux, Jean-Manuel, 4680 Hermee (BE); Jassin, Francis, 4680 Hermee (BE)
(74) Mandataire: Van Malderen, Joelle

(57) **Abrégé**

La présente invention se rapporte à un procédé de mise en pince en positionnement d'une pièce (4) destinée à être usinée à l'aide d'un référentiel six points, dans lequel on dispose de manière précise ladite pièce à usiner (4) à l'aide d'éléments constituant le référentiel six points (9), on fixe ladite pièce à l'aide de moyens de serrage tels que des clames de serrages afin d'éviter tout mouvement de ladite pièce à usiner (4), y compris pendant l'usinage, et on usine ladite pièce à usiner (4), caractérisé en ce que les éléments (1) servant de référentiel six points sont constitués d'une part de plusieurs tiges rigides (2,2',2'') permettant le positionnement précis de ladite pièce (4) selon le référentiel six points (9) et d'autre part d'un matériau composite (3,3') entourant chaque tige rigide (2,2',2'') et présentant à la fois une élasticité suffisante pour adapter ses contours aux contours de ladite pièce à usiner (4) au niveau de la surface de contact (6,7) entre ladite pièce et ledit matériau composite (3,3'), et une rigidité suffisante pour résister à des efforts de serrage allant de 1 Nm à 10 Nm.

## Description

### Objet de l'invention

La présente invention se rapporte à un procédé de mise en pince en positionnement exact d'une pièce comme un pied d'aube, plus précisément en positionnement statique par référentiel six points. Le procédé de mise en pince en positionnement exact permettra un usinage particulièrement précis de ladite pièce.

On entend par "mise en pince" la mise en place ou le maintien d'une pièce sur un outillage ou bâti par un blocage à l'aide d'un élément de fixation tel qu'une pince permettant ledit blocage par coincement de ladite pièce sur le bâti, en vue de permettre l'usinage précis de ladite pièce.

### Arrière-plan technologique

En propulsion aéronautique ou spatiale, il est indispensable d'usiner les pièces et en particulier les pièces qui ont une fonction de jonction entre des éléments mobiles et des éléments fixes avec une précision particulièrement importante. Ceci est en fait le cas des pièces de jonction dans les turbines des turboréacteurs qui comprennent des aubages tournant autour d'un axe fixe et qui permettent d'assurer la transformation de l'énergie thermodynamique du fluide, par exemple de l'air, en une énergie mécanique utilisée à la propulsion.

Les turbocompresseurs comprennent des étages d'aubes mobiles appelés aubages et constitués habituellement d'aubes fixées directement sur un disque rotatif, et des étages d'aubes fixes appelés étages redresseurs.

La liaison mécanique aube mobile/disque rotatif est réalisée par l'intermédiaire d'une pièce appelée dispositif d'attachement qui peut être réalisée de plusieurs manières. Une forme d'exécution consiste à prévoir la présence d'encoches brochées sur le disque dans lesquelles les bulbes, c'est-à-dire les extrémités des aubes, vont s'embrocher.

La réalisation de tels dispositifs d'attachement est particulièrement délicate car les tolérances avec lesquelles ils doivent être fabriqués sont particulièrement contraignantes.

En effet, l'analyse fonctionnelle de ladite liaison mécanique aube/disque par l'intermédiaire du dispositif d'attachement oblige à positionner ledit dispositif d'attachement selon un système isostatique comportant six points d'appui dont certains sont situés sur des surfaces aérodynamiques. Ceci signifie que l'usinage doit être idéal et quasi parfait par rapport à ces points.

D'autre part, il est indispensable que lesdits points d'appui en question ne provoquent pas d'endommagement dudit dispositif d'attachement. En particulier, les efforts générés lors de l'usinage doivent conduire à des précautions particulières afin d'éviter toute dégradation dudit dispositif d'attachement en particulier au niveau des points d'appui.

Actuellement, on utilise plusieurs techniques permettant de positionner parfaitement ladite pièce constituant le dispositif d'attachement existant.

En particulier, on connaît l'utilisation d'alliage à bas point de fusion pour l'encapsulation de la pièce à usiner.

En effet, cette méthode consiste à assurer sans efforts mécaniques sur les surfaces aérodynamiques le transfert des références d'appui sur les éléments géométriques les plus faciles à utiliser. En pratique, les faces aménagées sur la capsule constituée de l'alliage à bas point de fusion et constituant le bloc sont les éléments sur lesquels les références sont appliquées.

Ensuite après usinage, il convient de démouler ou de casser ladite capsule en libérant ainsi la pièce usinée dudit bloc. Cependant, cette méthode présente l'inconvénient qu'elle nécessite une décontamination en vue de supprimer toute trace dudit alliage, étant donné que la capsule est réalisée habituellement en un métal lourd et polluant.

Le fait de devoir encapsuler et décapsuler ledit dispositif à usiner ainsi que de devoir le décontaminer génère des délais accrus et de ce fait un surcoût.

### Buts de l'invention

La présente invention vise à proposer un procédé de mise en pince en positionnement de la pièce destinée à être usinée qui ne présente pas les inconvénients de l'état de la technique.

En particulier, la présente invention vise à proposer une solution qui ne nécessite pas un encapsulage et donc un décapsulage de la pièce à usiner.

De même, la présente invention vise à éviter le problème de la décontamination ultérieure de ladite pièce à usiner.

La présente invention vise donc à proposer un procédé qui de ce fait est plus rapide à réaliser à un coût inférieur à celui pratiqué selon l'état de la technique.

La présente invention vise enfin à proposer un procédé de mise en pince en positionnement exact des pièces qui permet un usinage particulièrement précis.

### Principaux éléments de la technique

La présente invention se rapporte à un procédé de mise en pince en positionnement d'une pièce, qui est destinée à être usinée, à l'aide d'un référentiel six points, dans lequel on dispose de manière précise la pièce à usiner à l'aide d'éléments constituant le référentiel six points, on fixe ladite pièce à l'aide de moyens de serrage tels que des clames de serrages afin d'éviter tout mouvement de ladite pièce, y compris pendant l'usinage, et on usine ladite pièce, caractérisé en ce que les éléments servant de référentiel six points sont constitués d'une part d'une tige rigide et permettant le positionnement précis selon le référentiel six points et d'autre part d'un matériau composite entourant ladite tige rigide et présentant d'une part une élasticité suffisante pour adapter ses contours aux contours de ladite pièce au niveau de la surface de contact entre ladite pièce et ledit matériau composite, et d'autre part une rigidité suffisante pour résister à des efforts de serrage allant de 1 Nm à 10 Nm.

Dans ce référentiel six points, le matériau composite a pour fonction de répartir les forces d'appui exercées par la tige rigide sur une surface de la pièce plus grande. On comprendra dès lors l'importance de choisir une composition et une conformation du matériau composite telles qu'elles lui confèreront les propriétés mécaniques nécessaires pour assurer cette fonction.

Avantageusement, les tiges sont réalisées en métal tel que du carbure.

De préférence, le matériau composite présente une élasticité similaire à celle du silicone ou à celle de la résine époxy. Le choix de la matière élastique s'effectue en fonction du besoin, de façon à permettre soit un serrage de la pièce faible c'est-à-dire allant de 1 à 2 Nm , soit un serrage de la pièce plus important allant de 3 à 10 Nm.

De manière particulièrement préférée, le matériau composite est une résine époxy.

La présente invention se rapporte également à un élément destiné à réaliser un référentiel six points, caractérisé en ce qu'il est constitué d'une part d'une tige rigide et permettant le positionnement précis selon le référentiel six points et d'autre part d'un matériau composite entourant ladite tige rigide et présentant à la fois une élasticité suffisante pour adapter ses contours aux contours de ladite pièce au niveau de la surface de contact entre ladite pièce et ledit matériau composite, et une rigidité suffisante pour résister à des efforts de serrage allant de 1 Nm à 10 Nm.

Selon une forme préférée d'exécution, la pièce à usiner est une aube tournante dont on cherche à réaliser le pied en vue de pouvoir le fixer à une virole intérieure d'un étage redresseur au sein d'un turbocompresseur. Dans ce cas, l'élément, objet de la présente invention, constitue une unité du dispositif de fixation permettant de fixer ladite aube tournante sur un appareil d'usinage. Grâce à cet élément, le pied de l'aube tournante peut être usiné en toute sécurité et en toute précision.

La présente invention se rapporte enfin à l'utilisation du procédé ou de l'élément tels que décrits ci-dessus dans le domaine des turbocompresseurs en vue d'assurer la fixation sur un appareil d'usinage d'une pièce à usiner, telle une aube.

### Brève description des figures

La figure 1a représente un des éléments servant de référentiel six points selon la présente invention.

Les figures 1b (vue de côté) et 1c (vue en coupe transversale) décrivent schématiquement un procédé permettant la mise en oeuvre du positionnement précis d'une aube tournante d'un turbocompresseur à usiner, selon une forme préférée d'exécution de la présente invention.

La figure 2 décrit le principe de fixation d'une aube tournante 3 sur un appareil d'usinage au moyen des éléments selon la présente invention.

La figure 3 représente une aube tournante destinée à un étage rotorique d'un turbocompresseur et dont on a usiné le pied à l'aide du procédé de la présente invention.

La figure 4 représente un appareil utilisé pour l'usinage des aubes tournantes d'un turbocompresseur, avec les tiges métalliques constituant les éléments de fixation selon la présente invention.

La figure 5 est l'équivalent de la figure 4, dans laquelle les matériaux composites des éléments de fixation ont été en outre représentés.

### Description détaillée d'une forme d'exécution préférée

La technique décrite ci-dessous selon une forme d'exécution particulièrement préférée de la présente invention consiste à usiner une pièce, en particulier une pièce qui doit présenter un dimensionnement précis tel qu'un dispositif d'attachement, également appelé pied, qui constitue le moyen de fixation d'une aube sur un disque rotatif d'un étage rotorique d'un turbocompresseur.

Dans ce but, on recourt à un système d'appui hyperstatique compatible avec les appuis constituant le référentiel six points.

Les références d'usinage sont dans ce cas non pas transférées aux faces auxiliaires d'un élément annexe tel qu'une capsule obtenue à l'aide d'un alliage à bas point de fusion tel que décrit dans l'état de la technique, mais directement sur ladite pièce à usiner.

En vue d'éviter tout endommagement de cette dite pièce à usiner, et de ce fait en vue de limiter les efforts liés à l'usinage lui-même, on a prévu un positionnement de ladite pièce sur des appuis constituant le référentiel six points ainsi qu'un bridage de la pièce à l'aide d'un matériau qui présente une certaine élasticité tout en ayant une dureté suffisante. Un exemple d'un tel matériau est une résine époxy.

Ceci permet de maintenir la pièce selon le référentiel six points contre les appuis malgré les efforts dus à l'usinage sans endommager ladite pièce à usiner.

Ainsi, de manière particulièrement avantageuse, on évite les étapes d'encapsulage, de décapsulage et de décontamination telles que décrites dans l'état de la technique. Par conséquent, on supprime trois opérations à valeur ajoutée nulle qui étaient obligatoires selon les techniques antérieures.

Ceci permet également d'éviter l'utilisation d'un alliage à bas point de fusion et permet une économie tant en termes d'outillage d'encapsulage, qu'en termes de coût d'opérations.

Enfin, la durée du cycle de fabrication est nettement réduite par rapport aux techniques de l'art antérieur.

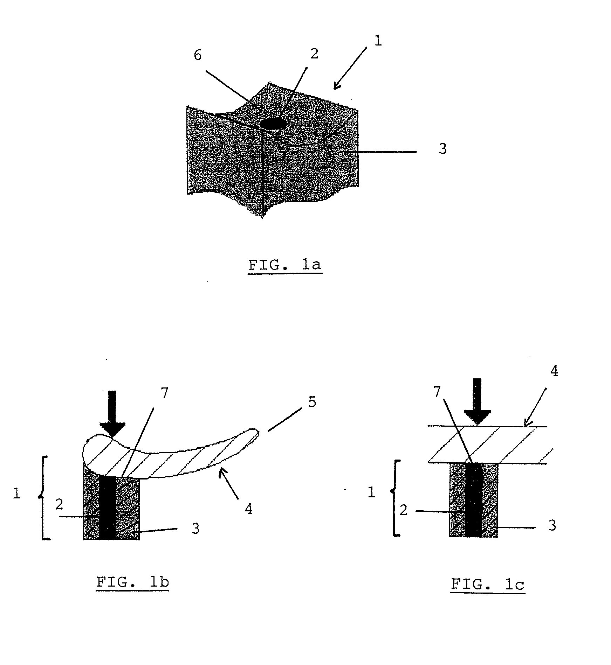

Les figures 1a, 1b et 1c représentent schématiquement un des éléments servant de référentiel six points et illustrent la manière dont ledit élément permet de fixer une pièce à usiner.

Cet élément 1 comprend une tige rigide métallique 2 entourée d'un matériau composite 3 qui est ici une résine époxy. Dans le cas présent, la pièce à usiner est une aube tournante 4 dont on cherche à usiner le pied 5.

La résine époxy 3 présente une surface 6 destinée à entrer en contact avec l'aube tournante 4 au niveau d'une surface 7.

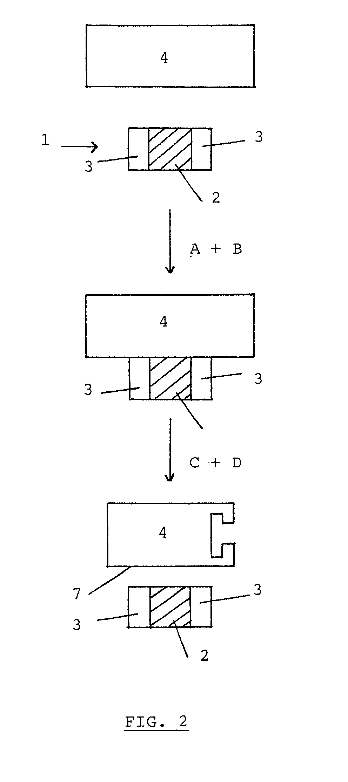

Lorsque l'on souhaite procéder à l'usinage du pied 5 de l'aube 4, ainsi qu'illustré à la figure 2, on procède selon les étapes suivantes :
- étape A : on positionne l'aube 4 au niveau de sa surface 7 sur l'appareil d'usinage (non représenté) par l'intermédiaire des éléments 1 ;
- étape B : on serre à l'aide de clames de serrage (flèches sur les figures 1b et 1c) les éléments 1 contre la surface 7 de l'aube 4, ce qui a pour effet que, sous l'effort de pression, l'extrémité supérieure de la tige rigide 2 s'appuie (un point d'appui) contre le bord inférieur de l'aube 4 et que la surface 6 des éléments 1, qui présentent les propriétés mécaniques nécessaires, s'adapte à la conformation de la surface 7 sur l'aube 4, réalisant ainsi la fixation de l'aube 4 sur l'appareil d'usinage au moyen des éléments 1;
- étape C : on usine avec précision l'aube 4 ainsi fixée au niveau de son pied 5 de manière à pouvoir ensuite fixer ce pied 5 sur la virole intérieure d'un étage rotorique d'un turbocompresseur ;
- étape D : on désolidarise l'aube 4 une fois usinée de l'appareil d'usinage en retirant les éléments 1 sans que l'aube 4 n'ait été endommagée par ces éléments 1.

Concrètement on utilise plusieurs éléments 1 qui constituent ensemble un référentiel d'appui six points.

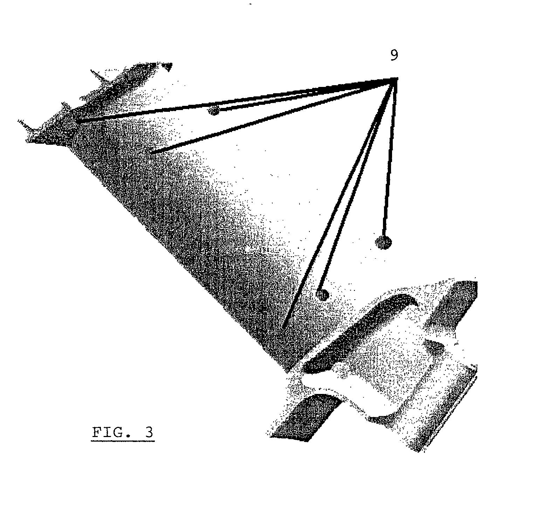

La figure 3 représente une aube tournante 4 avec son pied 5 une fois usinée et montre les six points d'appui 9 formés par les éléments 1 sur la surface de l'aube 3.

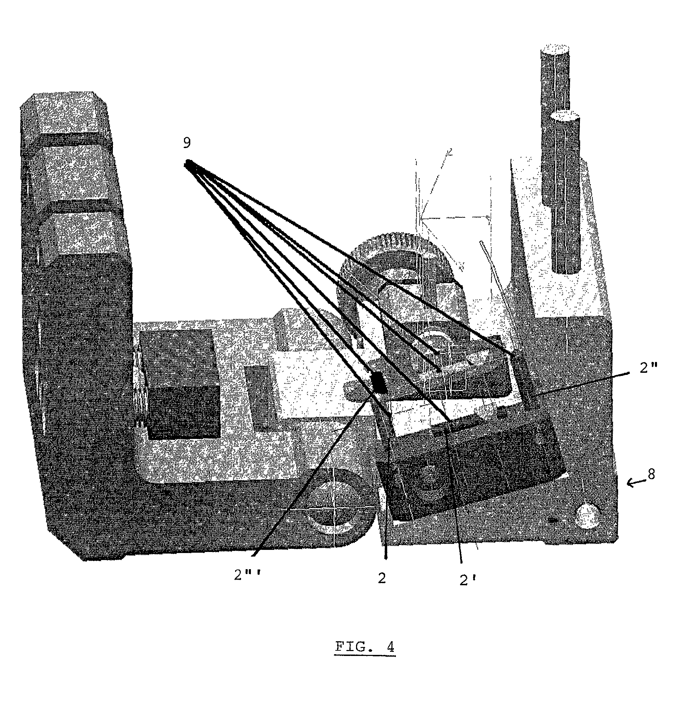

La figure 4 montre un exemple de positionnement des tiges métalliques 2,2',2'',... des éléments 1 sur un appareil d'usinage 8 destiné à usiner cette aube tournante 3. Sur les tiges 2,2',2'',... sont représentés les six points d'appui 9.

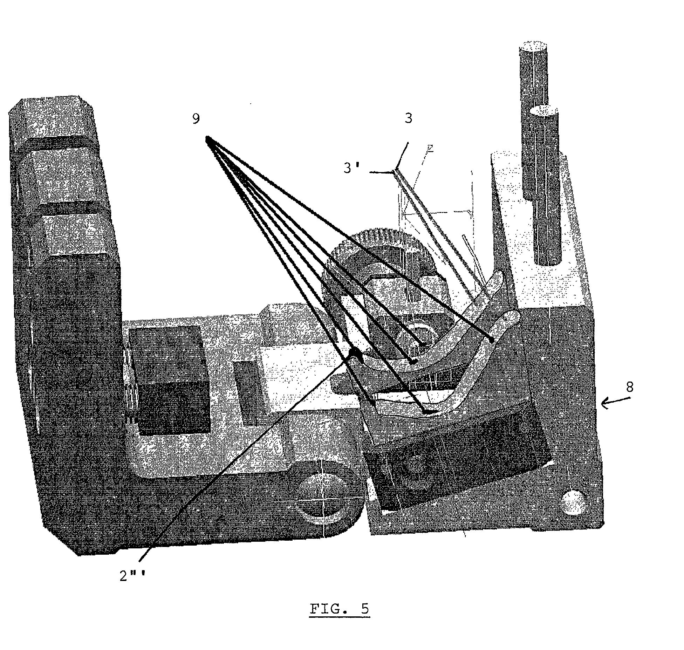

Les matériaux composites 3, 3' ne sont pas représentés sur cette figure, mais apparaissent sur la figure 5. On voit d'ailleurs sur la figure 5 comment les tiges 2,2',2'' sont pratiquement entièrement recouvertes par les matériaux composites 3,3', n'ayant plus qu'une extrémité supérieure qui dépasse pour constituer le point d'appui 9.

## Revendications

1. Procédé de mise en pince en positionnement d'une pièce (4) destinée à être usinée à l'aide d'un référentiel six points, dans lequel on dispose de manière précise ladite pièce à usiner (4) à l'aide d'éléments constituant le référentiel six points (9), on fixe ladite pièce à l'aide de moyens de serrage tels que des clames de serrages afin d'éviter tout mouvement de ladite pièce à usiner (4), y compris pendant l'usinage, et on usine ladite pièce à usiner (4), **caractérisé en ce que** les éléments (1) servant de référentiel six points sont constitués d'une part de plusieurs tiges rigides (2,2',2'') permettant le positionnement précis de ladite pièce (4) selon le référentiel six points (9) et d'autre part d'un matériau composite (3,3') entourant chaque tige rigide (2,2',2'') et présentant à la fois une élasticité suffisante pour adapter ses contours aux contours de ladite pièce à usiner (4) au niveau de la surface de contact (6,7) entre ladite pièce et ledit matériau composite (3,3'), et une rigidité suffisante pour résister à des efforts de serrage allant de 1 Nm à 10 Nm.

2. Procédé selon la revendication 1, **caractérisé en ce que** les tiges (2,2',2'') sont réalisées en un métal tel un carbure.

3. Procédé selon la revendication 1 ou 2, **caractérisé en ce que** le matériau composite (3,3') est réalisé en silicone ou en résine époxy.

4. Elément (1) destiné à réaliser un référentiel six points (9), **caractérisé en ce qu'**il est constitué d'une part de plusieurs tiges rigides (2,2',2'') permettant le positionnement précis d'une pièce à usiner (4) selon le référentiel six points (9) et d'autre part d'un matériau composite (3,3') entourant chaque tige rigide (2,2',2'') et présentant à la fois une élasticité suffisante pour adapter ses contours aux contours de ladite pièce à usiner (4) au niveau de la surface de contact (6,7) entre ladite pièce (4) et ledit matériau composite (3,3'), et une rigidité suffisante pour résister à des efforts de serrage allant de 1 Nm à 10 Nm.

5. Élément (1) selon la revendication 4, **caractérisé en ce que**, la pièce à usiner (4) correspondant à une aube tournante pour un turbocompresseur, ledit élément (1) constitue une unité du dispositif de fixation permettant de fixer ladite aube tournante sur un appareil d'usinage.

6. Utilisation du procédé selon l'une des revendications 1 à 3 ou de l'élément (1) selon la revendication 4 ou 5 dans le domaine des turbocompresseurs en vue d'assurer la fixation sur un appareil d'usinage d'une aube tournante à usiner en vue de pouvoir ensuite la fixer sur la virole intérieure d'un étage redresseur.
